# EUROPÄISCHE PATENTSCHRIFT

(11) **EP 1 441 897 B1**
(45) Veröffentlichungstag und Bekanntmachung des Hinweises auf die Patenterteilung: **09.08.2006**
(21) Anmeldenummer: 01274639.2
(22) Anmeldetag: 30.10.2001
(51) Int. Cl.: B29C 67/00

(54) **VERFAHREN ZUR HERSTELLUNG VON DREIDIMENSIONALEN SINTER-WERKSTÜCKEN**
METHOD FOR THE PRODUCTION OF THREE-DIMENSIONAL SINTERED WORKPIECES
PROCEDE DE PRODUCTION DE PIECES FRITTEES TRIDIMENSIONNELLES

(43) Veröffentlichungstag der Anmeldung: 04.08.2004
(73) Patentinhaber: CL Schutzrechtsverwaltungs GmbH, 96215 Lichtenfels (DE)
(72) Erfinder: HERZOG, Frank, 96215 Lichtenfels (DE)
(74) Vertreter: Hafner, Dieter
(86) Internationale Anmeldenummer: PCT/DE2001/004055
(87) Internationale Veröffentlichungsnummer: WO 2003/039844

(56) Entgegenhaltungen:
- DE-C- 4 309 524
- US-A- 6 001 297

## Beschreibung

Die Erfindung betrifft ein Verfahren zur Herstellung von dreidimensionalen Sinter-Werkstücken, insbesondere ein Stereolithographieverfahren, das in einem Sinter-Automaten, insbesondere einem Laser-Sinter-Automaten eingesetzt werden kann.

Aus EP-A-0 171 069 ist ein Verfahren bekannt, bei welchem auf einem Träger bzw. eine bereits verfestigte Schicht eine Schicht eines Sinter-Materials aufgetragen wird und durch Bestrahlen mit einem gerichteten Laserstrahl verfestigt wird. Dadurch wird das dreidimensionale Sinter-Werkstück lagenweise aufgebaut. Auf die Offenbarung der EP-A-0 171 069 wird ausdrücklich Bezug genommen, die Offenbarung dieser europäischen Anmeldung ist auch Gegenstand dieser Anmeldung.

Gemäß dem Oberbegriff des Anspruchs 1 und aus DE 43 09 524 ist ferner bereits bekannt, Lagen in Einzelabschnitte aufzuteilen und die Einzelabschnitte, beispielsweise Quadrate, nacheinander zu verfestigen. Dabei werden zwischen den Einzelbereichen oder einzelnen Bestrahlungszellen Trennfugen belassen, die dafür sorgen sollen, daß sich der Werkstückinnenbereich nicht in Folge von Verspannungen verziehen kann.

Die Verfestigung einzelner beabstandeter Zellen im Kernbereich des Werkstückes und das Freilassen von Trennfugen erscheint im Hinblick auf die Stabilität eines Werkstückes nachteilhaft, insbesondere dann, wenn das Werkstück z. B. beim Einsatz als Spritzgießwerkzeug hohen mechanischen Belastungen ausgesetzt wird.

Der Erfindung liegt die Aufgabe zugrunde, ein Verfahren mit den Merkmalen des Anspruches 1 derart weiterzubilden, daß auch bei der Herstellung von größeren Werkstücken mit Sicherheit ein Verzug der Werkstücke vermieden wird. Diese Aufgabe wird durch die kennzeichnenden Merkmale des Anspruches 1 gelöst. Vorteilhafte Weiterbildungen ergeben sich aus den Unteransprüchen.

Als Kern der Erfindung wird es angesehen, die nacheinander abfolgende Bestrahlung der Einzelabschnitte so vorzusehen, daß nacheinander bestrahlte Einzelabschnitte einen Abstand voneinander haben, der größer oder zumindest gleich dem mittleren Durchmesser des Einzelabschnittes ist. Insbesondere sollen die Einzelabschnitte in stochastischer Verteilung nacheinander bestrahlt werden und einen derartigen Abstand voneinander haben, daß der in Folge der thermischen Bestrahlung auftretende Wärmeeintrag in die Schicht weitgehend gleichmäßig ist. Dadurch werden Spannungen vermieden, die beim Stand der Technik zum Teil sogar dazu geführt haben, daß sich einzelne Schichten nicht ordnungsgemäß miteinander verbinden, sondern schichtweise auf- oder abplatzen, was zu einer Zerstörung des Werkstückes führt.

Insbesondere kann die nacheinander abfolgende Bestrahlung so geschehen, daß sich benachbart liegende Einzelabschnitte randseitig überlappen. Dies bedeutet, daß die Bestrahlung über den definierten Flächenbereich des einzelnen Abschnittes hinausgeht und den Nachbarbereich mit umfaßt, so daß sich zwischen den Einzelabschnitten eine Gitterstruktur ausbildet, deren Dichte sich von den innerhalb der Gitterstruktur liegenden Flächenbereichen unterscheidet, weil das Sinter-Material im Bereich der Gitterstrukturen mehrfach oder mit erhöhtem Energieeintrag bestrahlt wird.

Das Einsintern einer Gitterstruktur kann im Rahmen der Erfindung aber auch ohne die bereichsweise Bestrahlung von Einzelabschnitten erfolgen, nämlich dadurch, daß im Werkstückinnenbereich zunächst eine Sinterung entlang der Gitterstrukturlinien erfolgt und nachfolgend einzeln oder flächig die innerhalb der Gitterstruktur liegenden Bereiche bestrahlt werden. Dies kann dadurch geschehen, daß der Laserstrahl wirklich nur die Einzelbereiche innerhalb der Gitterstruktur abfährt. Es liegt aber auch im Rahmen der Erfindung, linienartig die gesamte Fläche zu überrastern und dabei die Linien der Gitterstruktur noch einmal zu überfahren oder zu kreuzen.

Innerhalb der Abschnitte erfolgt eine Bestrahlung durch nebeneinanderliegende Bestrahlungslinien, es sind aber auch andere Arten der Bestrahlung möglich. Es ist auch möglich, benachbart liegende einzelne Abschnitte so zu bestrahlen, daß die Bestrahlungslinien benachbarter Einzelabschnitte rechtwinklig zueinander angeordnet sind.

Zudem kann es vorteilhaft sein, die Ränder der einzelnen Abschnitte nach Bestrahlung der Innenbereiche der Einzelabschnitte zusätzlich einer umrandenden Bestrahlung auszusetzen.

Weiterhin kann es vorteilhaft sein, die Gitterstruktur innerhalb eines Werkstückes mit gegenseitigem Versatz anzuordnen, d. h., daß die Gitterlinien von aufeinanderliegenden Lagen nicht übereinander liegen, sondern versetzt zueinander angeordnet sind, so daß die Einzelabschnitte der Lagen im Verbund übereinander liegen, wie dies bei Mauersteinen einer auf Verbund gesetzten Steinmauer der Fall ist.

Die Einzelabschnitte übereinander angeordneter Lagen können unterschiedliche Größen, unterschiedliche Form oder eine unterschiedliche Orientierung aufweisen. Es kann vorteilhaft sein, daß im Bereich der Werkstückoberfläche eine zum Werkstückinnenbereich unterschiedliche Struktur, insbesondere Gitterstruktur eingesintert wird.

Es kann ferner vorteilhaft sein, den Randbereich des Werkstückes mit einer höheren Dichte zu sintern, insbesondere kann die Dichte im Randbereich etwa der Dichte der Gitterstruktur im Werkstückkernbereich entsprechen. Die höhere Dichte kann durch eine im wesentlichen vollständige Aufschmelzung des Sinter-Materials im Randbereich erzielt werden. Die höhere Dichte kann auch im Bereich von innen liegenden Oberflächen an Werkstückkanälen, einzuarbeitenden Gewinden oder dergleichen eingesintert werden, so daß Werkstückkanäle und Werkstückoberflächen nachbearbeitbar sind, insbesondere durch spanabhebende oder schleifende Bearbeitung.

Die Überlappung benachbarter Einzelabschnitte soll etwa 0,03 - 0,5 mm betragen, je nach Werkstückgröße, es ist aber auch möglich, diesen Bereich deutlich zu über- oder unterschreiten. Die Überlappung kann im Randbereich des Werkstückes größer sein als im Kernbereich des Werkstückes.

In stärker strukturierten Werkstückbereichen ist es vorteilhaft, zwischen der Laserbestrahlung benachbarter Sinter-Abschnitte längere Zeitabschnitte liegen zu lassen als bei flächiger ausgelegten Sinterbereichen.

Die Erfindung ist anhand eines Ausführungsbeispieles in den Zeichnungsfiguren näher erläutert. Diese zeigen:
- Fig. 1: die Draufsicht auf eine beispielhaft herausgegriffene Lage eines Sinter-Werkstückes;
- Fig. 2: eine Draufsicht in stark vergrößerter Darstellung auf eine beispielhaft herausgegriffene Lage eines Sinter-Werkstückes;
- Fig. 3: eine Draufsicht auf eine Gitterstruktur eines Sinter-Werkstückes;
- Fig. 4: eine Draufsicht einer alternativen Ausführungsform einer Gitterstruktur eines Sinter-Werkstückes;
- Fig. 5: einen Schnitt durch übereinander geordnete Lagen von Einzelabschnitten sowie
- Fig. 6: eine Draufsicht auf eine beispielhaft herausgegriffene Lage eines Werkstückes.

Bei dem erfindungsgemäßen Verfahren zur Herstellung von dreidimensionalen Sinter-Werkstücken 1, bei dem es sich insbesondere um ein Stereolithographieverfahren zur Anwendung in einem Laser-Sinter-Automaten handelt, wird zunächst lagenweise Sintermaterial aus einer Vorratseinrichtung auf eine Unterlage aufgetragen. Das Sintermaterial kann flüssig, pastös, pulverartig oder körnig sein. Anschließend wird durch die bereichsweise Bestrahlung von festgelegten Einzelabschnitten 2 das Sintermaterial derart erhitzt, daß sich die Bestandteile des Sintermaterials bei kompletter oder zumindest teilweiser Aufschmelzung bestrahlungs-bereichsabhängig zu dem Werkstück 1 miteinander verbinden.

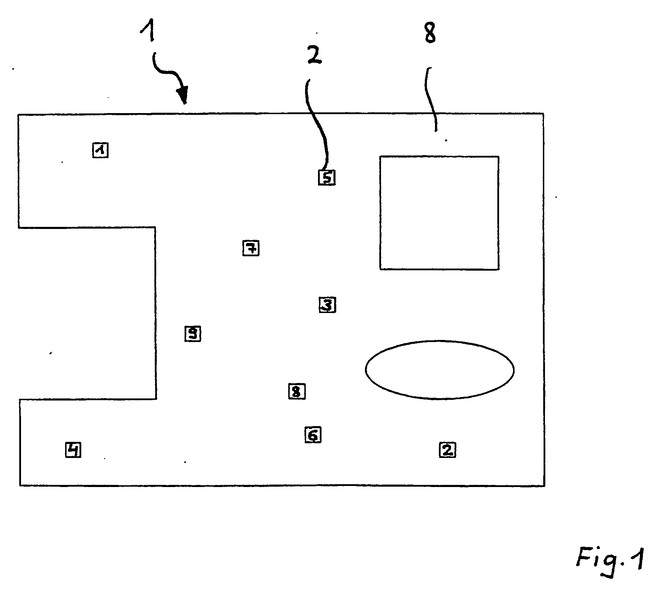

Wie aus der Draufsicht auf ein Werkstück 1 gemäß Fig. 1 hervorgeht, haben zeitlich nacheinander bestrahlte Einzelabschnitte 2 einen Abstand voneinander, der größer oder zumindest gleich dem mittleren Durchmesser dieser Einzelabschnitte 2 ist. Die Einzelabschnitte 2 sind mit Ziffern versehen, welche die Reihenfolge der Bestrahlung verdeutlichen. Die Einzelabschnitte 2 werden dabei ich stochastischer Verteilung nacheinander bestahlt. Indem die Einzelabschnitte 2 in der geschilderten Weise bestrahlt werden, werden Spannungen, die sich durch die Materialveränderungen ergeben, gleichmäßig über das Werkstück 1 verteilt und ein Verzug des Werkstücks 1 wird verhindert. Insbesondere haben die zeitlich nacheinander bestrahlten Einzelabschnitte 2 einen derartigen Abstand voneinander, daß der in Folge der Bestrahlung auftretende Wärmeeintrag weitgehend gleichmäßig in die zu sinternde Lage 8, 8' erfolgt. verhindert, die zum Verzug des Werkstückes 1 oder sogar zur Rißbildung führen können.

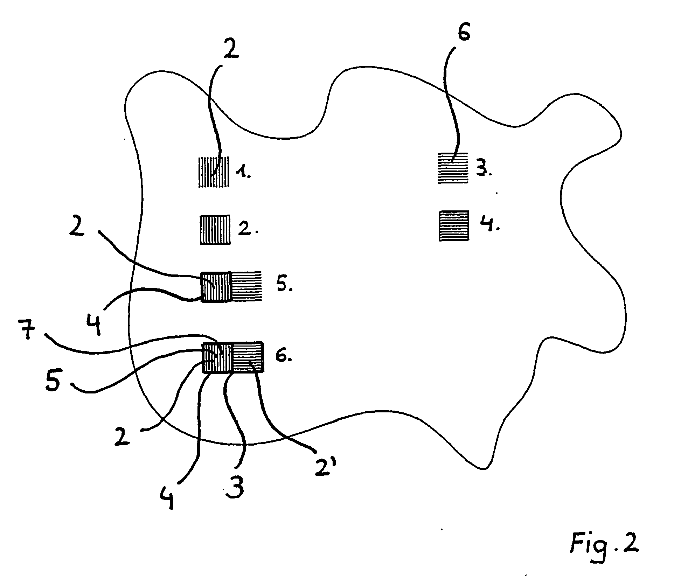

Bei dem in Fig. 2 dargestellten vergrößerten Ausschnitt eines Werkstückes 1 ist die Reihenfolge der bestrahlten Einzelabschnitte 2 wieder mit entsprechenden Ziffern versehen. Wie in Schritt 5 bzw. Schritt 6 abgebildet ist, überlappen sich die benachbart liegenden Einzelabschnitte 2, 2' randseitig. Dadurch bildet sich eine Gitterstruktur 3 aus, die eine erhöhte Dichte im Vergleich zu den Innenbereichen der Einzelabschnitte 2, 2' aufweist, da die Randbereiche 4 der Einzelabschnitte 2, 2' eine mehrfache Aufschmelzung mit einem erhöhten Energieeintrag erfahren. Die Gitterstruktur 3 mit ihrer erhöhten Dichte kann beim Einsatz des fertigen Werkstückes 1 einwirkende Kräfte aufnehmen, wobei die nötige Zähigkeit des Werkstückes 1 durch die geringere Dichte der Einzelabschnitte 2, 2' erreicht wird. Somit kann ein Werkstück 1 mit einer hohen Härte und Zugfestigkeit bei gleichzeitig hoher Zähigkeit hergestellt werden. Anschließend können die Randbereiche 4 nochmals mit dem Laserstrahl umfahren werden.

Alternativ zu der beschriebenen Herstellung der Gitterstruktur 3 ist es auch möglich, daß in die Sintermaterial-Lagen eine Gitterstruktur 3 eingesintert wird, deren Dichte sich von den innerhalb der Gitterstruktur 3 liegenden Flächenbereichen 5 unterscheidet Die Dichte der Gitterstruktur 3 ist dabei vorzugsweise höher als die Dichte der darin liegenden Flächenbereiche 5. Um diese Gitterstruktur 3 herzustellen, kann der Laserstrahl über das gesamte Werkstück 1 entsprechend der Gitterstruktur 3 verfahren werden. Im Anschluß daran ist es möglich, auch die dazwischen liegenden Flächenbereiche 5 aufzuschmelzen, insbesondere in einer wie oben geschilderten stochastischen Verteilung. Somit erhalten auch die dazwischen liegenden Flächenbereiche 5 die notwendige Festigkeit, die gleichzeitig dem Werkstück die erforderliche Zähigkeit verleihen.

Innerhalb der Einzelabschnitte 2, 2' erfolgt gemäß Fig. 2 eine zeilen- oder spaltenartige Bestrahlung durch nebeneinander liegende Bestrahlungslinien 6. Die nebeneinander liegenden Einzelabschnitte 2, 2' (in Schritt 5 und 6) weisen rechtwinklig zueinander liegende Bestrahlungslinien 6 auf, wodurch sich eine insgesamt gleichmäßige Textur über das gesamte Werkstück 1 ausbildet, wenn sämtliche Einzelabschnitte 2, 2' mit zueinander versetzten, insbesondere rechtwinklig zueinander liegenden Bestrahlungslinien 6 bestrahlt werden. Diese Anordnung der Bestrahlungslinien bewirkt außerdem einen weiteren Abbau von Spannungen im Werkstück 1.

Als alternative Bestrahlungsmethode können die Einzelabschnitte 2, 2' in ihrem Innenbereich 7 auch punktuell bestrahlt werden, so daß sowohl die Einzelabschnitte 2, 2' als auch das Werkstück 1 als ganzes isotrop aufgebaut ist. Die Ränder bzw. die Randbereiche 4 der Einzelabschnitte 2, 2' werden gem. Fig. 2 nach der Bestrahlung der Abschnittinnenbereiche 7 zusätzlich einer umrandenden Bestrahlung ausgesetzt, damit sich die gewünschte Gitterstruktur 3 deutlich ausbildet. Dieser Mehrantrag an Laser-Sinter-Energie führt zu einer zusätzlichen Versteifung, die der mechanischen Stabilität gegen Verwerfungen und dergleichen solcher Bauteile entgegenkommt.

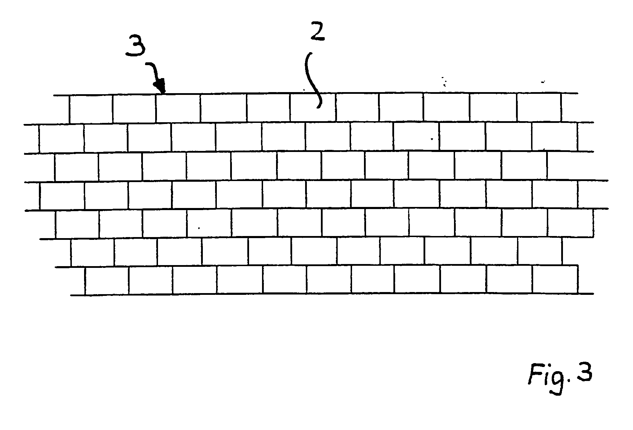

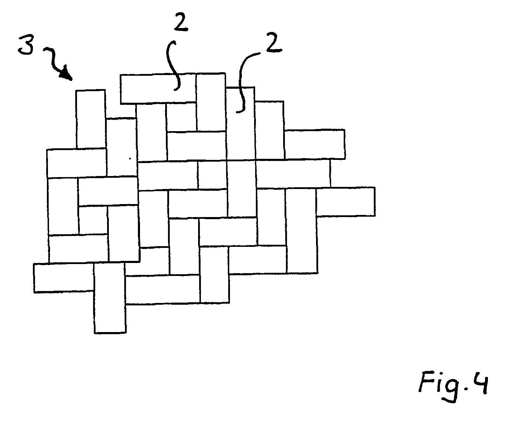

Entsprechend Fig. 3 ist die Gitterstruktur 3 innerhalb des Werkstückes 1 mit gegenseitigem Versatz angeordnet. Die Gitterstruktur 3 kann jedoch auch (siehe Fig. 4) in beiden Richtungen mit einem gegenseitigem Versatz angeordnet sein, so daß sich die Spannungen, die sich aufgrund der Gitterstruktur 3 ergeben können, noch mehr ausgleichen. Dabei weisen die Einzelabschnitte 2 auch unterschiedliche Größen auf, um z. B. unterschiedlichen Anforderungen im Rand- oder Innenbereich des Sinterwerkstückes 1 gerecht zu werden.

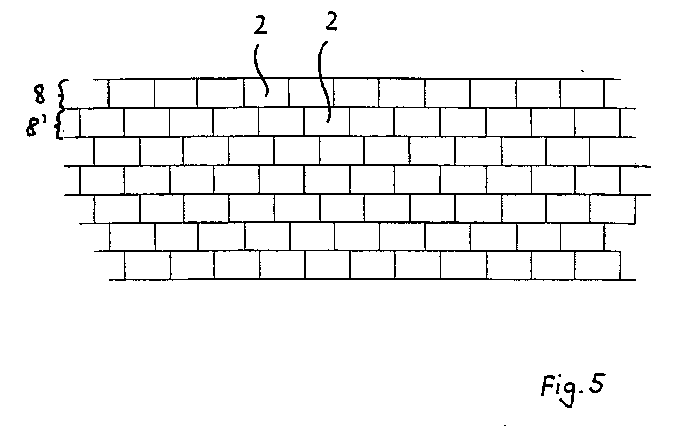

Ebenso ist es auch möglich, daß die Einzelabschnitte 2 übereinander angeordneter Lagen 8, 8' unterschiedliche Größen und/oder unterschiedliche Formen und/oder unterschiedliche Orientierungen hinsichtlich einer Längsachse aufweisen. Die Einzelabschnitte 2, 2' übereinander angeordneter Lagen 8, 8' sind gemäß Fig. 5 versetzt zueinander angeordnet. Das Ergebnis ist eine hochfeste und verzugsfreie Struktur.

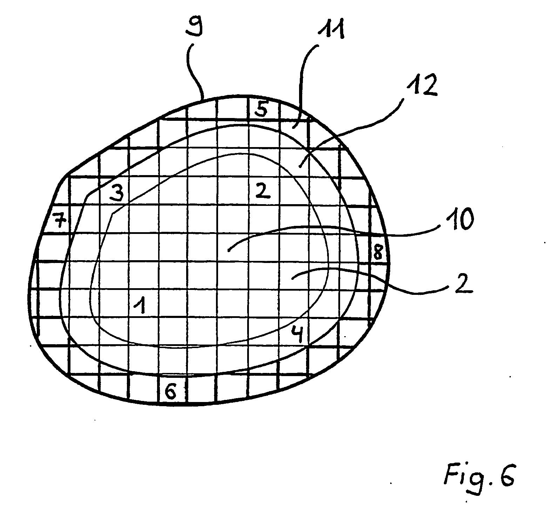

Fig. 6 zeigt eine unterschiedliche Ausbildung der Gitterstruktur 3 im Bereich der Werkstückoberfläche 9 im Vergleich zum Werkstückinnenbereich 10. Die mittlere Dichte im Randbereich 11 entspricht etwa der Dichte der Gitterstruktur im Werkstückinnenbereich 10. Der Zwischenbereich 12, der zwischen dem Rand- und dem Innenbereich liegt, weist eine mittlere Dichte auf, die zwischen der mittleren Dichte des Rand- und des Innenbereiches liegt. Außerdem ist die mittlere Dichte des gesamten Randbereiches 11 höher als im Werkstückinnenbereich 10. Diese höhere Dichte im Randbereich 11 führt zu einer einfacheren Nachbearbeitbarkeit der außenliegenden Oberflächen z. B. durch spanabhebende oder schleifende Bearbeitung. Die höhere Dichte der Gitterstruktur 3 im Randbereich 11 bewirkt außerdem eine erhöhte Festigkeit der stark beanspruchten Werkstückoberfläche und eine Zähigkeit im Kernbereich des Werkstückes 1, womit das Werkstück 1 z. B. vor einem Sprödbruch gesichert ist. Dies kann mit einem Laserbrennfleck höherer Energiedichte erfolgen. Die höhere Dichte im Randbereich 11 kann durch im wesentliche vollständige Aufschmelzung des Sintermaterials erzielt werden. Die höhere Dichte kann auch im Bereich von innen liegenden Oberflächen an Werkstückkanälen, Gewinden oder anderen Gebilden eingesintert werden, die demnach nach dem Sintern einfach nachbearbeitet werden können. Außerdem weisen damit auch die innenliegenden, meist stark beanspruchten Oberflächen die notwendige Härte auf. Auch in dieser Figur sind einige Einzelabschnitte 2 beispielhaft mit Ziffern versehen, die die Reihenfolge ihrer Bestrahlung verdeutlichen.

Die Überlappung benachbarter Einzelabschnitte 2,2' beträgt etwa 0,03 - 0,5 mm. Die Überlappung im Randbereich 11 des Werkstückes 1 ist vorzugsweise am größten und nimmt über den Zwischenbereich 12 zum Innenbereich 10 ab. Demnach ist auch die mittlere Dichte im Randbereich 11 am höchsten. Der Randbereich 11 des Werkstückes 1 kann auch vollständig aufgeschmolzen werden, so daß nur im Randbereich 11 die Gitterstruktur 3 nicht mehr vorhanden ist. Dazu wird im Randbereich ein Laserbrennfleck höherer Energiedichte verwendet.

Um einen gleichmäßigen Eintrag zu gewährleisten, liegen in stärker strukturierten Werkstückbereichen zwischen der Bestrahlung benachbarter Sinterabschnitte längere Zeitabschnitte als in flächiger ausgelegten Sinterbereichen. Als Sintermaterial können sowohl metallische Pulver, Pasten, Flüssigkeiten oder körniges Material oder Sintermaterial aus Kunststoff verwendet werden.

## Patentansprüche

1. Verfahren zur Herstellung von dreidimensionalen Sinter-Werkstücken, insbesondere Stereolithograpieverfahren zur Anwendung in einem Laser-Sinter-Automaten, wobei
- lagenweise Sintermaterial, insbesondere flüssiges, pastöses, pulverartiges oder körniges Sintermaterial aus einer Vorratseinrichtung auf eine Unterlage aufgetragen wird und
- durch bereichsweise Bestrahlung von festgelegten Einzelabschnitten derart erhitzt wird, daß sich die Bestandteile des Sintermaterials bei teilweiser oder kompletter Aufschmelzung bestrahlungs-bereichsabhängig zu dem Werkstück miteinander verbinden,
**dadurch gekennzeichnet**
- das zeitlich nacheinander bestrahlte Einzelabschnitte einen Abstand voneinander haben, der größer oder zumindest gleich dem mittleren Durchmesser dieser Einzelabschnitte ist.

2. Verfahren nach Anspruch 1, wobei
die Einzelabschnitte in stochastischer Verteilung nacheinander bestrahlt werden.

3. Verfahren nach einem der vorhergehenden Ansprüche, wobei
die zeitlich nacheinander bestrahlten Einzelabschnitte einen derartigen Abstand voneinander haben, daß der in Folge der Bestrahlung auftretende Wärmeeintrag weitgehend gleichmäßig in die zu sinternde Lage erfolgt.

4. Verfahren nach einem der vorhergehenden Ansprüche, wobei
sich benachbart liegende Einzelabschnitte randseitig überlappen.

5. Verfahren nach 1, wobei eine darauf Folgende Bestrahlung so durchgeführt wird, daß die Teile zwischen den Einzelabschnitten verfestigt werden und die Randbereiche der Einzelabschnitte weiter verdichtet werden, wodurch in die Lagen eine Gitterstruktur eingesintert wird, deren Dichte sich von den innerhalb der Gitterstruktur liegenden Flächenbereichen unterscheidet.

6. Verfahren nach Anspruch 5, wobei
die Gitterstruktur eine höhere Dichte als die darin liegenden Flächenbereiche hat.

7. Verfahren nach Anspruch 5 oder 6, wobei
die Gitterstruktur durch eine Überlappung nebeneinanderliegender Einzelabschnitte durch mehrfache Bestrahlung ausgebildet wird.

8. Verfahren nach einem der vorhergehenden Ansprüche, wobei
innerhalb der Einzelabschnitte eine Bestrahlung durch nebeneinander liegende Bestrahlungslinien (zeilen- oder spaltenartige Bestrahlung) erfolgt.

9. Verfahren nach einem der vorhergehenden Ansprüche, wobei
die Einzelabschnitte in ihrem Innenbereich punktuell bestrahlt werden.

10. Verfahren nach einem der vorhergehenden Ansprüche, wobei
die Ränder der Einzelabschnitte nach Bestrahlung der AbschnittInnenbereiche zusätzlich einer umrandenden Bestrahlung ausgesetzt werden.

11. Verfahren nach einem der vorhergehenden Ansprüche, wobei
die Gitterstruktur innerhalb des Werkstücks mit gegenseitigem Versatz angeordnet ist.

12. Verfahren nach einem der vorhergehenden Ansprüche, wobei
die Einzelabschnitte übereinander angeordneter Lagen unterschiedliche Größen aufweisen.

13. Verfahren nach einem der vorhergehenden Ansprüche, wobei
die Einzelabschnitte übereinander angeordneter Lagen unterschiedliche Formen aufweisen.

14. Verfahren nach einem der vorhergehenden Ansprüche, wobei
die Einzelabschnitte übereinander angeordneter Lagen hinsichtlich einer Längsachsenlage unterschiedliche Orientierungen aufweisen.

15. Verfahren nach einem der vorhergehenden Ansprüche, wobei
die Einzelabschnitte übereinander angeordneter Lagen versetzt übereinander angeordnet sind.

16. Verfahren nach einem der vorhergehenden Ansprüche, wobei
im Bereich der Werkstückoberflächen eine zum Werkstückinnenbereich unterschiedliche Struktur, insbesondere Gitterstruktur eingesintert wird.

17. Verfahren nach einem der vorhergehenden Ansprüche, wobei
die mittlere Dichte im Randbereich etwa der Dichte der Gitterstruktur entspricht.

18. Verfahren nach einem der vorhergehenden Ansprüche, wobei
die Dichte im Randbereich deutlich höher ist als im Werkstückinnenbereich.

19. Verfahren nach einem der vorhergehenden Ansprüche, wobei
die höhere Dichte durch im wesentlichen vollständige Aufschmelzung des Sintermaterials im Randbereich erzielt wird.

20. Verfahren nach einem der vorhergehenden Ansprüche, wobei
die höhere Dichte auch im Bereich von innenliegenden Oberflächen an Werkstückkanälen, Gewinden oder dergleichen eingesintert wird.

21. Verfahren nach einem der vorhergehenden Ansprüche, wobei
die Überlappung benachbarter Einzelabschnitte etwa 0,03-0,5 mm beträgt.

22. Verfahren nach einem der vorhergehenden Ansprüche, wobei
die Überlappung im Randbereich des Werkstückes größer ist als im Innenbereich des Werkstücks.

23. Verfahren nach einem der vorhergehenden Ansprüche, wobei
der Randbereich des Werkstücks im wesentlichen vollständig aufgeschmolzen wird.

24. Verfahren nach einem der vorhergehenden Ansprüche, wobei
im Randbereich ein Laserbrennfleck höherer Energiedichte verwendet wird.

25. Verfahren nach einem der vorhergehenden Ansprüche, wobei
in stärker strukturierten Werkstückbereichen zwischen der Bestrahlung benachbarter Sinterabschnitte längere Zeitabschnitte liegen als in flächiger ausgelegten Sinterbereichen.

26. Verfahren nach einem der vorhergehenden Ansprüche, wobei metallischem Sintermaterial verwendet wird.

27. Verfahren nach einem der vorhergehenden Ansprüche, wobei Sintermaterial aus Kunststoffen verwendet wird.

## Claims

1. Method of manufacturing three-dimensional sintered workpieces, in particular a stereolithographic method for use in an automatic laser sintering machine, wherein
- sintering material, in particular liquid, paste-like, powder-like or granular sintering material is applied from a storage device layer by layer onto a base and
- by zonal irradiation of defined individual portions is heated in such a way that the constituents of the sintering material, when partially or completely fused, combine in an irradiation-zone-dependent manner to form the workpiece,
**characterized in**
- **that** successively irradiated individual portions have a mutual spacing that is greater than or at least equal to the mean diameter of said individual portions.

2. Method according to claim 1, wherein the individual portions are successively irradiated in a random distribution.

3. Method according to one of the preceding claims, wherein the successively irradiated individual portions have such a mutual spacing that the heat introduction occurring as a result of the irradiation is effected substantially uniformly into the layer to be sintered.

4. Method according to one of the preceding claims, wherein mutually adjacent individual portions overlap at the edge.

5. Method according to claim 1, wherein a subsequent irradiation is carried out in such a way that the parts between the individual portions are strengthened and the edge regions of the individual portions are further compacted, thereby sintering into the layers a grid structure, the density of which differs from the surface regions situated inside the grid structure.

6. Method according to claim 5, wherein the grid structure has a higher density than the surface regions situated therein.

7. Method according to claim 5 or 6, wherein the grid structure is formed by an overlapping of juxtaposed individual portions by multiple irradiation.

8. Method according to one of the preceding claims, wherein within the individual portions an irradiation is effected by irradiation lines situated side by side (line- or column-like irradiation).

9. Method according to one of the preceding claims, wherein the individual portions in their inner region are spot-irradiated.

10. Method according to one of the preceding claims, wherein the edges of the individual portions after irradiation of the portion inner regions are additionally exposed to boundary irradiation.

11. Method according to one of the preceding claims, wherein the grid structure is disposed in a mutually offset manner inside the workpiece.

12. Method according to one of the preceding claims, wherein the individual portions of superimposed layers differ in size.

13. Method according to one of the preceding claims, wherein the individual portions of superimposed layers differ in shape.

14. Method according to one of the preceding claims, wherein the individual portions of superimposed layers differ in orientation with regard to a longitudinal axis position.

15. Method according to one of the preceding claims, wherein the individual portions of superimposed layers are superimposed in an offset manner.

16. Method according to one of the preceding claims, wherein in the region of the workpiece surfaces a structure differing from the workpiece inner region, in particular a grid structure is sintered in.

17. Method according to one of the preceding claims, wherein the mean density in the edge region corresponds approximately to the density of the grid structure.

18. Method according to one of the preceding claims, wherein the density in the edge region is markedly higher than in the workpiece inner region.

19. Method according to one of the preceding claims, wherein the higher density is achieved by substantially complete fusing of the sintering material in the edge region.

20. Method according to one of the preceding claims, wherein the higher density is sintered in also in the region of inner-lying surfaces of workpiece channels, threads or the like.

21. Method according to one of the preceding claims, wherein the overlap of adjacent individual portions is approximately 0.03 - 0.5 mm.

22. Method according to one of the preceding claims, wherein the overlap is greater in the edge region of the workpiece than in the inner region of the workpiece.

23. Method according to one of the preceding claims, wherein the edge region of the workpiece is substantially completely fused.

24. Method according to one of the preceding claims, wherein in the edge region a laser focal spot of higher energy density is used.

25. Method according to one of the preceding claims, wherein in workpiece regions of a thicker structure there are longer time intervals between the irradiation of adjacent sintered portions than in sintered regions of a shallower design.

26. Method according to one of the preceding claims, wherein metal sintering material is used.

27. Method according to one of the preceding claims, wherein sintering material comprising plastics materials is used.

## Revendications

1. Procédé de fabrication de pièces frittées tridimensionnelles, en particulier procédé de stéréolithographie destiné à être appliqué dans un automate de frittage par laser, dans lequel
- on applique en couches sur un support du matériau de frittage, en particulier du matériau de frittage liquide, pâteux, pulvérulent ou granuleux provenant d'un dispositif d'alimentation et
- on chauffe par irradiation sectorielle de sections individuelles définies de telle manière que les composants du matériau de frittage s'unissent par fusion partielle ou complète en fonction de la section irradiée pour former la pièce,
**caractérisé par le fait**
- **que** les sections individuelles irradiées successivement dans le temps ont entre elles une distance qui est supérieure ou au moins égale au diamètre moyen de ces sections individuelles.

2. Procédé selon la revendication 1, dans lequel les sections individuelles sont irradiées successivement suivant une distribution stochastique.

3. Procédé selon l'une des revendications précédentes, dans lequel les sections individuelles irradiées successivement dans le temps ont entre elles une distance telle que l'apport de chaleur résultant de l'irradiation se produit dans une large mesure uniformément dans la couche à fritter.

4. Procédé selon l'une des revendications précédentes, dans lequel des sections individuelles adjacentes se chevauchent sur les bords.

5. Procédé selon la revendication 1, dans lequel on réalise une irradiation suivante de telle manière que les parties entre les sections individuelles sont consolidées et les bords des sections individuelles davantage densifiés, moyennant quoi on obtient par frittage dans les couches une structure réticulaire dont la densité diffère de celle des zones de surface situées à l'intérieur de la structure réticulaire.

6. Procédé selon la revendication 5, dans lequel la structure réticulaire a une densité plus élevée que les zones de surface situées à l'intérieur de celle-ci.

7. Procédé selon la revendication 5 ou 6, dans lequel la structure réticulaire est formée par un chevauchement de sections individuelles adjacentes par irradiation répétée.

8. Procédé selon l'une des revendications précédentes, dans lequel on effectue à l'intérieur des sections individuelles une irradiation par lignes d'irradiation juxtaposées (irradiation en lignes ou en colonnes).

9. Procédé selon l'une des revendications précédentes, dans lequel l'irradiation est effectuée ponctuellement à l'intérieur des sections individuelles.

10. Procédé selon l'une des revendications précédentes, dans lequel les bords des sections individuelles sont exposés en plus à une irradiation bordière après irradiation des intérieurs de section.

11. Procédé selon l'une des revendications précédentes, dans lequel la structure réticulaire est disposée à l'intérieur de la pièce avec décalage mutuel.

12. Procédé selon l'une des revendications précédentes, dans lequel les sections individuelles de couches superposées présentent des tailles différentes.

13. Procédé selon l'une des revendications précédentes, dans lequel les sections individuelles de couches superposées présentent des formes différentes.

14. Procédé selon l'une des revendications précédentes, dans lequel les sections individuelles de couches superposées présentent des orientations différentes par rapport à une couche d'axe longitudinal.

15. Procédé selon l'une des revendications précédentes, dans lequel les sections individuelles de couches superposées sont superposées en quinconce ou de manière décollée.

16. Procédé selon l'une des revendications précédentes, dans lequel on réalise par frittage au niveau des surfaces de la pièce une structure, en particulier une structure réticulaire, différente de celle à l'intérieur de la pièce.

17. Procédé selon l'une des revendications précédentes, dans lequel la densité moyenne au bord correspond à peu près à la densité de la structure réticulaire.

18. Procédé selon l'une des revendications précédentes, dans lequel la densité au bord est nettement plus élevée qu'à l'intérieur de la pièce.

19. Procédé selon l'une des revendications précédentes, dans lequel la densité plus élevée est obtenue par fusion essentiellement complète du matériau de frittage au bord.

20. Procédé selon l'une des revendications précédentes, dans lequel la densité plus élevée est aussi obtenue par frittage au niveau de surfaces intérieures sur des canaux de la pièce, des filetages ou analogue.

21. Procédé selon l'une des revendications précédentes, dans lequel le chevauchement de sections individuelles adjacentes est d'environ 0,03 à 0,5 mm.

22. Procédé selon l'une des revendications précédentes, dans lequel le chevauchement est plus grand au bord de la pièce qu'à l'intérieur de la pièce.

23. Procédé selon l'une des revendications précédentes, dans lequel la fusion au bord de la pièce est essentiellement complète.

24. Procédé selon l'une des revendications précédentes, dans lequel on utilise au bord un spot laser de densité énergétique plus élevée.

25. Procédé selon l'une des revendications précédentes, dans lequel les intervalles de temps séparant l'irradiation de sections frittées adjacentes sont plus longs dans les zones de la pièce plus fortement structurées que dans les zones frittées plus planes.

26. Procédé selon l'une des revendications précédentes, dans lequel on utilise du matériau de frittage métallique.

27. Procédé selon l'une des revendications précédentes, dans lequel on utilise du matériau de frittage en matières synthétiques.
